# EUROPÄISCHE PATENTANMELDUNG

(11) **EP 0 829 483 A2**
(43) Veröffentlichungstag der Anmeldung: **18.03.1998**
(21) Anmeldenummer: 97113749.2
(22) Anmeldetag: 08.08.1997
(51) Int. Cl.: C07F 7/04

(54) **Verfahren zur Herstellung von Acyloxyalkoxysilanen**

(30) Priorität: 12.08.1996 DE 19632483
(71) Anmelder: BASF AKTIENGESELLSCHAFT, 67056 Ludwigshafen (DE)
(72) Erfinder: Friedrich, Holger, Dr., 67240 Bobenheim-Roxheim (DE); Leutner, Bernd, Dr., 67227 Frankenthal (DE); Mronga, Nortbert, Dr., 69221 Dossenheim (DE); Schmid, Raimund, Dr., 67435 Neustadt (DE)
(74) Vertreter: Isenbruck, Günter, Dr.

(57) **Zusammenfassung**

Verfahren zur Herstellung eines Silans der Formel I

R¹ₙSiR²ₘ (I)

worin R¹ ein ―O―Y-Rest, n eine ganze Zahl von 1 bis 3, R² ein 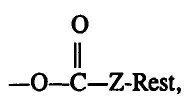 m eine ganze Zahl bis 1 bis 3 und n + m = 4 ist, und Y und Z unabhängig voneinander ggf. mit einem oder mehreren Halogen substituierte C₁- bis C₂₀-Alkyl, C₂- bis C₂₀-Alkenyl, C₂- bis C₂₀-Alkinyl und -(CH₂)ₚ-A sind, worin p eine ganze Zahl von 0 bis 6 und das gegebenenfalls mit einem oder mehreren C₁- bis C₆-Alkylen substituierte A einen 3- bis 20-gliedrigen Kohlenwasserstoffring bedeuten, wobei eine Halogenverbindung des Siliciums mit der Formel II

SiX₄ (II)

worin X Fluor, Chlor, Brom und Iod ist, mit Verbindungen der Formel III und IV, oder mit einem Anhydrid der Formel V und der Verbindung der Formel IV

MR² (III)

H-R¹ (IV)

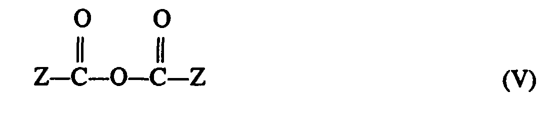

worin R¹ und R² sowie Z die obige Bedeutung besitzen, M ein Metall der ersten und zweiten Hauptgruppe ist, umgesetzt wird.

## Beschreibung

Die Erfindung betrifft ein Verfahren zur Herstellung eines Silans der Formel I

R¹ₙSiR²ₘ (I)

worin
- R¹: ein ―O―Y-Rest,
- n: eine ganze Zahl von 1 bis 3,
- R²: ein 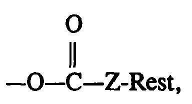
- m: eine ganze Zahl bis 1 bis 3 und n + m = 4 ist, und
- Y und Z: unabhängig voneinander ggf. mit einem oder mehreren Halogen substituierte C₁- bis C₂₀-Alkyl, C₂- bis C₂₀-Alkenyl, C₂- bis C₂₀-Alkinyl und -(CH₂)ₚ-A sind, worin p eine ganze Zahl von 0 bis 6 und das gegebenenfalls mit einem oder mehreren C₁- bis C₆-Alkylen substituierte A einen 3- bis 20-gliedrigen Kohlenwasserstoffring bedeuten.

US-P 3,296,195 offenbart ein Verfahren zur Herstellung von Alkoxyacetoxysilanen, insbesondere Di-tert.-butoxydiacetosilan, bei dem in einem ersten Schritt aus Tetrachlorsilan und Essigsäureanhydrid Tetraacetoxysilan hergestellt wird, das in einem zweiten Schritt mit tert.-Butanol zu der eingangs erwähnten Verbindung umgesetzt wird. Der Nachteil dieses Verfahrens liegt in seiner Mehrstufigkeit, insbesondere darin, daß das Tetraacetxyosilan vor der Umsetzung mit dem entsprechenden Alkohol isoliert werden muß.

US-P 3,296,161 offenbart gleichfalls ein Verfahren zur Herstellung von Dialkoxydiacetoxysilanen, insbesondere Di-tert.-butoxydiacetoxysilan, worin in einem ersten Schritt aus Essigsäureanhydrid und Tetrachlorsilan das Tetraacetoxysilan hergestellt wird, das in einem weiteren sich daran anschließenden Schritt mit einem entsprechenden Alkohol umgesetzt wird. Der Nachteil dieses Verfahrens liegt gleichfalls in der Tatsache, daß das Tetraacetoxysilan vor der Umsetzung mit dem Alkohol isoliert werden muß.

EP 0 465 723 offenbart ein Verfahren zur Herstellung von Di-tert.-butoxydiacetoxysilan durch Umsetzung von Tetraacetoxysilan und tert.-Butanol. Hierbei entsteht aufgrund des Einsatzes von Essigsäure HCl-Gas, das auf aufwendige Weise möglichst restlos entfernt werden muß, da ansonsten Neberreaktionen, beispielsweise die Bildung von Polymeren, in unerwünscht hohem Maße auftreten.

Erfindungsgemäße Aufgabe ist es, die zuvor aufgeführten Nachteile zu überwinden. Insbesondere ist es erfindungsgemäße Aufgabe, ein Verfahren zur Herstellung von Verbindungen der Formel I zur Verfügung zu stellen, das es ermöglicht, die Reaktion als Eintopfverfahren ohne die aufwendige Synthese und Isolierung von Vorprodukten, insbesonders des Tetraacyloxysilans vor der Umsetzung mit einem Alkohol durchführen zu müssen. Weiterhin ist es erfindungsgemäße Aufgabe, die Verbindungen der Formel I auf direktem Wege aus Halogensilan, Salzen und/oder Anhydrid der entsprechenden Carbonsäure und Alkohol herzustellen.

Die erfindungsgemäßen Aufgaben wurden durch ein Verfahren zur Herstellung eines Silans der Formel I

R¹ₙSiR²ₘ (I)

worin
- R¹: ein ―O―Y-Rest,
- n: eine ganze Zahl von 1 bis 3,
- R²: ein 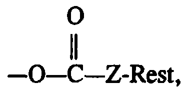
- m: eine ganze Zahl bis 1 bis 3 und n + m = 4 ist, und
- Y und Z: unabhängig voneinander ggf. mit einem oder mehreren Halogen substituierte C₁- bis C₂₀-Alkyl, C₂- bis C₂₀-Alkenyl, C₂- bis C₂₀-Alkinyl und -(CH₂)ₚ-A sind, worin p eine ganze Zahl von 0 bis 6 und das gegebenenfalls mit einem oder mehreren C₁- bis C₆-Alkylen substituierte A einen 3- bis 20-gliedrigen Kohlenwasserstoffring bedeuten,
gelöst.

Das Verfahren zeichnet sich dadurch aus, daß eine Halogenverbindung des Siliciums mit der Formel II

SiX₄ (II)

worin
- X: Fluor, Chlor, Brom und Iod ist,
mit Verbindungen der Formel III und IV, oder mit einem Anhydrid der Formel V und der Verbindung der Formel IV

MR² (III)

H-R¹ (IV)

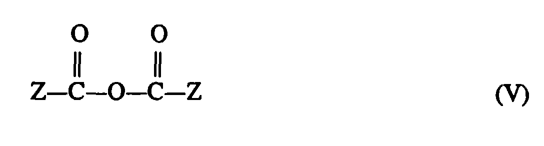

worin
- R¹ und R² sowie Z: die obige Bedeutung besitzen,
- M: ein Metall der ersten und zweiten Hauptgruppe ist,
umgesetzt wird.

Die erfindungsgemäßen Substituenten Y und Z können unabhängig voneinander ein C₁- bis C₂₀-Alkyl, bevorzugt ein C₁- bis C₁₂-Alkyl und besonders bevorzugt ein C₁- bis C₆-Alkyl, ein C₂- bis C₂₀-Alkenyl, bevorzugt ein C₂- bis C₁₂-Alkenyl und besonders bevorzugt ein C₂- bis C₆-Alkenyl sowie ein C₂- bis C₂₀-Alkinyl, bevorzugt ein C₂- bis C₁₂-Alkinyl und besonders bevorzugt ein C₂- bis C₆-Alkenyl sein.

Erfindungsgemäß bevorzugte Alkylreste sind Methyl, Ethyl, n-Butyl, iso-Butyl, sec.-Butyl, tert.-Butyl, n-Pentyl, iso-Pentyl, sec.-Pentyl, 1,1-Dimethylpropyl (tert.-Pentyl), neo-Pentyl, 1,2-Dimethylpropyl, n-Hexyl, iso-Hexyl, sec.-Hexyl, neo-Hexyl, n-Heptyl, iso-Heptyl, neo-Heptyl, n-Octyl, iso-Octyl, neo-Octyl, n-Nonyl, iso-Nonyl, neo-Nonyl, n-Decyl, iso-Decyl, neo-Decyl, n-Undecyl, iso-Undecyl, neo-Undecyl, n-Dodecyl, iso-Dodecyl neo-Dodecyl, n-Tetradecyl, n-Hexadecyl, n-Octadecyl und n-Eicosanyl, wobei C₁- bis C₄-Alkylreste besonders bevorzugt sind, wie Methyl, Ethyl, n-Propyl, iso-Propyl, n-Butyl, iso-Butyl, sec.-Butyl und tert.-Butyl.

Erfindungsgemäß besonders bevorzugte Alkenylreste sind n-Propenyl, iso-Propenyl, n-Butenyl, iso-Butenyl, sec.-Butenyl, tert.-Butenyl, n-Pentenyl, iso-Pentenyl, neo-Pentenyl, 1,2-Dimethylpropenyl, n-Hexenyl, iso-Hexenyl, sec.-Hexenyl, neo-Hexenyl, n-Heptenyl, iso-Heptenyl, neo-Heptenyl, n-Octenyl, iso-Octenyl, neo-Octenyl, n-Nonenyl, iso-Nonenyl, neo-Nonenyl, n-Decenyl, iso-Decenyl, neo-Decenyl, n-Undecenyl, iso-Undecenyl, neo-Undecenyl, n-Dodecenyl, iso-Dodecenyl und neo-Dodecenyl.

Besonders bevorzugte C₂- bis C₆-Alkenylreste sind Ethenyl, 2-Propenyl, 2-Butenyl, 3-Butenyl, 1-Methyl-2-propenyl, 2-Methyl-2-propenyl, 2-Pentenyl, 3-Pentenyl, 4-Pentenyl, 1-Methyl-2-butenyl, 2-Methyl-2-butenyl, 3-Methyl-2-butenyl, 1-Methyl-3-butenyl, 2-Methyl-3-butenyl, 3-Methyl-3-butenyl, 1,2-Dimethyl-1-propenyl, 1,2-Dimethyl-2-propenyl, 2-Hexenyl, 3-Hexenyl, 4-Hexenyl, 5-Hexenyl, 1-Methyl-2-pentenyl, 2-Methyl-2-pentenyl, 3-Methyl-2-pentenyl, 4-Methy-2-pentenyl, 1-Methyl-3-pentenyl, 2-Methyl-3-pentenyl, 3-Methyl-3-pertenyl, 4-Methyl-3-pentenyl, 1-Methyl-4-pentenyl, 2-Methyl-4-pentenyl, 3-Methyl-4-pentenyl, 4-Methyl-4-pentenyl, 1,1-Dimethyl-2-butenyl, 1,1-Dimethyl-3-butenyl, 1,2-Dimethyl-2-butenyl, 1,2-Dimethyl-3-butenyl, 1,3-Dimethyl-2-butenyl, 1,3-Dimethyl-3-butenyl, 2,2-Dimethyl-3-butenyl, 2,3-Dimethyl-2-butenyl, 2,3-Dimethyl-3-butenyl, 3,3-Dimethyl-2-butenyl, 1-Ethyl-2-butenyl, 1-Ethyl-3-butenyl, 2-Ethyl-2-butenyl, 2-Ethyl-3-butenyl, 1,1,2-Trimethyl-2-propenyl, 1-Ethyl-1-methyl-2-propenyl und 1-Ethyl-2-methyl-2-propenyl.

Erfindungsgemäß bevorzugte C₂- bis C₆-Alkinylreste sind Ethinyl, 1-Propinyl, 2-Propinyl, 1-Butinyl, 2-Butinyl, 3-Butinyl, 1-Methyl-2-propinyl, 1-Pentinyl, 2-Pentinyl, 3-Pentinyl, 4-Pentinyl, 1-Methyl-2-butinyl, 1-Methyl-3-butinyl, 2-Methyl-3-butinyl, 3-Methyl-1-butinyl, 1,1-Dimethyl-2-propinyl, 1-Ethyl-2-propinyl, 1-Hexinyl, 2-Hexinyl, 3-Hexinyl, 4-Hexinyl, 5-Hexinyl, 1-Methyl-2-hexinyl, 2-Methyl-3-pentinyl, 1-Methyl-4-pentinyl, 2-Methyl-3-pentinyl, 2-Methyl-4-pentinyl, 3-Methyl-1-pentinyl, 4-Methyl-4-pentinyl, 4-Methyl-1-pentinyl, 4-Methyl-2-pentinyl, 1,2-Dimethyl-2-butinyl, 1,1-Dimethyl-3-butinyl, 1,2-Dimethyl-3-butinyl, 2,2-Dimethyl-3-butinyl, 3,3-Dimethyl-1-butinyl, 1-Ethyl-2-butinyl, 1-Ethyl-3-butinyl, 2-Ethyl-3-butinyl sowie 1-Ethyl-1-methyl-2-propinyl.

Besonders bevorzugte erfindungsgemäße Alkinylreste sind Ethinyl, 1-Propinyl, 2-Propinyl, 1-Butinyl, 2-Butinyl, 3-Butinyl, 3-Butin-2-yl, 1-Methyl-2-propinyl, 1-Pentinyl, 2-Pentinyl, 3-Pentinyl, 1-Hexinyl, 2-Hexinyl, 3-Hexinyl, 4-Hexinyl, 5-Hexinyl, 3-Hexin-2-yl, 2-Ethinyl-cyclohexyl.

Erfindungsgemäß besonders bevorzugte Reste sind Reste mit 6 bis 20 C-Atomen, die über einen tertiären Kohlenstoff gebunden sind, an den sich über eine Dreifachbindung ein weiterer Alkylrest anschließt. Erfindungsgemäß besonders bevorzugte Beispiele dieser Beste sind insbesondere für die Verwendung als Alkohol der allgemeinen Formel IV, 1-(1-Butynyl)cyclohexanyl, 1-(1-Butynyl)cyclopentanyl, 4-Phenyl-2-methyl-3-butyn-2-yl, 2-Methyl-3-pentyn-2-yl, 3-Methyl-4-hexyn-3-yl, 4-Methyl-2-octyn-4-yl, 4-Methyl-2-heptyn-4-yl, 2-Methyl-3-hexyn-2-yl, 3-Methyl-4-heptyn-3-yl, 1-Propynyl-1-cyclohexanyl, 1-Ethinyl-1-cyclohexanyl.

A steht für einen 3- bis 20-gliedrigen, bevorzugt 3- bis 10- und besonders bevorzugt 3- bis 6-gliedrigen Kohlenwasserstoffring. Dieser Kohlenwasserstoffring kann aus einem oder mehreren Ringen bestehen, die gesättigt, teilweise gesättigt und ungesättigt sein können.

Erfindungsgemäß bevorzugte gesättigte Kohlenwasserstoffringe sind Cyclopropyl, Cyclobutyl, Cyclopentyl, Cyclohexyl, Cycloheptyl, Cyclooctyl, Norbonyl und Adamantyl, wobei Cyclopentyl, Cyclohexyl, Cycloheptyl und Cyclooctyl besonders bevorzugt sind.

Die erfindungsgemäßen teilweise gesättigten Kohlenwasserstoffringe können eine oder mehrere Doppelbindungen und/oder Dreifachbindungen aufweisen.

Ringreste mit einer Doppelbindung sind beispielsweise Cyclopropenyl, Cyclobutenyl, Cyclopentenyl, Cyclohexyl und Cycloheptenyl. Ringreste mit einer Dreifachbindung sind beispielsweise Cyclobutenyl, Cyclopentenyl, Cyclohexinyl und Cycloheptenyl. Cyclohexyl-2-en-4-in ist als Beispiel für einen Ringrest mit einer Doppelbindung und einer Dreifachbindung zu nennen. Als cyclische Reste mit zwei Doppelbindungen kommen Cyclobutadien und 2,4-Cyclohexadien in Frage.

Die erfindungsgemäßen Kohlenwasserstoffringe weisen 3 bis 20, vorzugsweise 3 bis 10 und besonders bevorzugt 3 bis 7, Glieder auf. Weiterhin können die erfindungsgemäßen Kohlenwasserstoffringe sowohl ungesättigt, teilgesättigt als auch gesättigt vorliegen. Darüber hinaus kann es ferner erfindungsgemäß bevorzugt sein, daß die Kohlenwasserstoffringe mit einem oder mehreren Halogenen substituiert sind.

Beispiele bevorzugter Reste gesättigter Kohlenwasserstoffringe mit 3 bis 7 Gliedern bzw. 3 bis 7 Kohlenstoffatomen sind Cyclopropyl, Cyclobutyl, Cyclopentyl, Cyclohexyl und Cycloheptyl.

Als teilweise gesättigte Kohlenwasserstoffringe sind Reste mit einer, zwei oder drei Mehrfachbindungen, d.h. Doppel- bzw. Dreifachbindungen, bevorzugt. Erfindungsgemäß bevorzugte Beispiele mit einer Doppelbindung sind Cyclopropenyl, Cyclobutenyl, Cyclopentenyl, Cyclohexenyl und Cycloheptenyl. Bevorzugte Beispiele mit einer Dreifachbindung sind Cyclopropinyl, Cyclobutinyl, Cyclopentinyl, Cyclohexinyl und Cycloheptinyl. Bevorzugte Reste der Kohlenwasserstoffringsysteme mit zwei Doppelbindungen sind Cyclobutadienyl, Cyclopentadienyl, Cyclohexadienyl und Cycloheptadienyl.

Die ungesättigten Kohlenwasserstoffringe sind bevorzugt aromatische Reste mit vorzugsweise 6 bis 18 C-Atomen wie beispielsweise Phenyl, 1-Naphthyl, 2-Naphthyl, 1-Antryl, 2-Antryl und 9-Antryl, wobei Phenyl, 1-Naphthyl und 2-Naphthyl bevorzugt und Phenyl besonders bevorzugt ist. Alkylsubstituierte Arylreste sind 2-Methylphenyl, 3-Methylphenyl, 4-Methylphenyl, 2,4-Dimethylphenyl, 2,5-Dimethylphenyl, 2,6-Dimethylphenyl, 3,4-Dimethylphenyl, 3,5-Dimethylphenyl, 2,3,4-Trimethylphenyl, 2,3,5-Trimethylphenyl, 2,3,6-Trimethylphenyl, 2,4,6-Trimethylphenyl, 2,4,6-Trimethylphenyl, 2-Ethylphenyl, 3-Ethylphenyl, 4-Ethylphenyl, 2-n-Propylphenyl, 3-n-Propylphenyl und 4-n-Propylphenyl, wobei Toluyl und Xylyl besonders bevorzugt sind. Die erfindungsgemäßen aromatischen Reste können halogeniert sein.

Halogenierte Arylreste sind beispielsweise einfach oder mehrfach mit Halogenen wie Fluor, Chlor, Brom, Iod, bevorzugt Fluor, Chlor und Brom und besonders bevorzugt mit Chlor substituierte Aromaten, wie beispielsweise 2-, 3-, 4-Chlorphenyl, 2,4-Dichlorphenyl, 2,6-Dichlorphertyl und 2,4,6-Trichlorphenyl.

Beispiele besonders bevorzugter halogenierter Alkylreste sind Chlormethyl, Dichlormethyl, Trichlormethyl, 3-Chlorcyclohexyl, 3,4-Dichlorcyclohexyl.

Erfindungsgemäß bevorzugte Kombinationen von Y und Z sind beispielsweise (zuerst wird der Substituent für Y und als zweites der Substituent für Z genannt) Tertiärbutyl, Methyl; Tertiärbutyl, Ethyl, Tertiärbutyl, N-Propyl sowie Tertiäramyl, Methyl; Tertiäramyl, Ethyl, Tertiäramyl, Propyl.

X steht für die Halogene Fluor, Chlor, Brom und Iod, bevorzugt Fluor, Chlor und Brom, besonders bevorzugt Chlor und Brom. Gleichfalls ist es möglich, gemischte Tetrahslogenverbindungen des Siliciums einzusetzen. Von allen Tetrahalogeniden des Siliciums sind Tetrafluorsilan und Tetrachlorsilan bevorzugt und Tetrachlorsilan besonders bevorzugt.

M steht für die Metalle der 1. und 2. Hauptgruppe, insbesondere für die Metalle der 1. Hauptgruppe. Unter den Metallen der 1. Hauptgruppe sind Lithium, Natrium und Kalium bevorzugt und Natrium besonders bevorzugt.

Das erfindungsgemäße Verfahren kann vorzugsweise als Eintopfreaktion erfolgen. Unter dem Begriff Eintopfreaktion ist eine chemische Reaktion zu verstehen, die ggf. in mehreren Schritten abläuft, jedoch deren Zwischenprodukte nicht isoliert werden. In der Eintopfreaktion können entweder alle Reaktanden von Anfang an im Reaktionsgefäß zugegen sein oder nacheinander zugeführt werden, wobei die Zugabe eines weiteren Reaktanden vor der Beendigung der Zugabe des zuvor zugegebenen erfolgen kann.

In dem erfindungsgemäßen Verfahren können die Verbindungen der Formel III und IV und/oder V zu der Verbindung der Formel II vorzugsweise gleichzeitig oder nacheinander zugegeben werden, wobei in einer bevorzugten Ausführungsform des erfindungsgemäßen Verfahrens erst die Verbindung III und dann die Verbindung IV und/oder V und in einer weiteren Ausführungsform erst die Verbindung IV und/oder V und dann die Verbindung III zu der Verbindung II zugegeben werden kann.

Weiterhin ist es in dem erfindungsgemäßen Verfahren bevorzugt, daß keine Isolierung der bei der Umsetzung der Verbindung der Formel II mit den Verbindungen der Formeln III und IV bzw. bei der Umsetzung der Verbindung der Formel II mit einem Anhydrid der Formel V und IV entstehenden Zwischenprodukte und Intermediate erforderlich ist. Insbesondere ist in dem erfindungsgemäßen Verfahren keine Isolierung von Zwischenprodukten, die bei der Umsetzung von der Verbindung der Formel II mit der Verbindung der Formel III oder bei der Umsetzung der Verbindung der Formel II mit der Verbindung der Formel IV oder bei der Umsetzung der Verbindung der Formel II mit einem Anhydrid der Formel V anfallen, notwendig.

In einer besonders bevorzugten Ausführungsform des erfindungsgemäßen Verfahrens wird die Verbindung mit der Formel II in einem unpolaren oder aprotisch polaren Lösungsmittel, welches vorzugsweise selbst nicht mit einem Halogensilan reagiert, vorgelegt und die Verbindungen III und IV und/oder V entweder in Substanz oder gleichtalls in einem unpolaren oder aprotisch polaren Lösungsmittel zugegeben.

Beispiele für erfindungsgemäße unpolare Lösungsmittel sind zwischen 40 und 100°C siedende Benzinfraktionen, beispielsweise Petrolether, insbesondere Petroletherfraktion mit dem Siedebereich 40 bis 60°C sowie n-Pentan, n-Hexan, n-Heptan, n-Octan und n-Nonan.

Besonders bevorzugte aliphatische Kohlenwasserstoffe sind jedoch auch die Isomerengemische des Pentan, Hexan, Heptan, Octan, Isooctan, Nonan und Decan sowie deren Mischungen. Gleichfalls können auch cycloaliphatische Kohlenwasserstoffe wie Cyclopentan, Cyclohexan und Methylcyclohexan eingesetzt werden. Ferner können als unpolare Lösungsmittel Chlorkohlenwasserstoffe wie Chloroform, Methylenchlorid, Dichlormethan, Tetrachlorkohlenstoff verwendet werden. Erfindungsgemäße unpolare Lösungsmittel sind aromatische Lösungsmittel wie Benzol, Toluol, Xylol und Ethylbenzol. Beispiele für die im erfindungsgemäßen Verfahren einsetzbaren aprotisch polaren Lösungsmittel sind Ether wie Diethylether, Methyl-tert.-butylether (MTBE), Tetrahydrofuran, 1,2-Dimethoxyethan. Weitere erfindungsgemäße aprotisch polare Lösungsmittel sind Dimethylformamid, N-Methylpyrrolidon und Dimethylsulfoxyd.

Für das erfindungsgemäße Verfahren können auch die Mischungen der zuvor genannten Lösungsmittel eingesetzt werden.

Darüber hinaus ist es möglich, durch Zusatz entsprechender Hilfsmittel die Löslichkeit der Reaktanten zu erhöhen. Solche Hilfsmittel sind beispielsweise oberflächenaktive Mittel, Seifen.

In den zuvor genannten Lösungsmitteln können im erfindungsgemäßen Verfahren die Reaktanten beispielsweise in Lösung, in Suspension, in Emulsion, in Aufschlämmung oder als Dispersion vorliegen.

Es ist jedoch gleichfalls möglich, das erfindungsgemäße Verfahren ohne Lösungsmittel durchzuführen.

Die Verbindung der Formel II wird im erfindungsgemäßen Verfahren vorzugsweise entweder in einem der o.g. Lösungsmittel gelöst, jedoch bevorzugt, insbesondere, wenn es sich um Tetrachlorsilan handelt, in Substanz der Reaktion zugeführt.

Die Verbindungen der allgemeinen Formel III werden, insbesondere, wenn es sich um Natriumacetat handelt, in einem der vorgenannten Lösungsmittel aufgenommen, jedoch vorzugsweise dispergiert. Petrolether und Hexan haben sich als besonders geeignet zum Dispergieren der Verbindung der Formel II, insbesondere von Natriumacetat, erwiesen. Es ist jedoch gleichfalls möglich, die Verbindung der Formel III als Feststoff direkt in der Reaktion einzusetzen.

Der Alkohol mit der Formel IV bzw. das Anhydrid der Formel V kann mit oder ohne ein der zuvor genannten Lösungsmittel der Reaktion zugeführt werden. Wenn der Alkohl der Formel IV bzw. das Anhydrid der Formel V unter den Reaktionsbedingungen, insbesondere bei Raumtemperatur, flüssig vorliegt, wird er bevorzugt ohne Lösungsmittel eingesetzt. Falls der Alkohol oder das Anhydrid unter den Reaktionsbedingungen, insbesondere bei Raumtemperatur, fest vorliegt, wird er bevorzugt als Lösung eines der zuvor genannten Lösungsmittel eingesetzt.

Das erfindungsgemäße Verfahren kann kontinuierlich und diskontinuierlich durchgeführt werden, wobei diskontinuierlich bevorzugt ist.

Das erfindungsgemäße Verfahren wird in einem Temperaturbereich von 10 bis 100, bevorzugt 20 bis 70 und besonders bevorzugt 40 bis 60°C über einen Zeitraum von 1 Minute bis 24 Stunden, bevorzugt 1 bis 3 und besonders bevorzugt 1,5 bis 2 Stunden im Unterdruck oder bei Normaldruck oder im Überdruck, bevorzugt bei Normaldruck, durchgeführt.

In einer bevorzugten Ausführungsform wird die Verbindung der Formel III, bevorzugt Natriumacetat, in einem inerten Lösungsmittel, bevorzugt Hexan oder Petrolether, zu einer Dispersion aufgeschlämmt (Komponente A). Anschließend wird die Verbindung der Formel II, bevorzugt Tetrachlorsilan, in einem Lösungsmittel gelöst, bevorzugt jedoch in Substanz (Komponente B), und die Verbindung der Formel IV, bevorzugt tert.-Butanol, in einem Lösungsmittel gelöst, bevorzugt jedoch in Substanz (Komponente C) vereinigt.

In einer weiteren Ausführungsform der vorliegenden Erfindung wird die Komponente A vorgelegt und die Komponenten B und C gleichzeitig zugegeben.

In einer anderen erfindungsgemäßen Ausführungsform wird die Komponente A vorgelegt und mit der Zugabe der Komponente B vor der Zugabe der Komponente C begonnen.

In einer weiteren erfindungsgemäßen Ausführungsform wird die Komponente A vorgelegt und mit der Zugabe der Komponente C vor der Zugabe der Komponente B begonnen. Diese Ausführungsform ist insbesondere dann vorteilhaft, wenn höhere Alkohole zum Einsatz kommen.

In einer anderen Ausführungsform der vorliegenden Erfindung wird die Komponente B und die Komponente C portionsweise alternierend zu Komponenete A gegeben, wobei sowohl mit der Komponente B als auch mit der Komponente C, vorzugsweise mit Komponente B, die alternierende Zugabe begonnen werden kann.

In einer weiteren erfindungsgemäßen Ausführungsform wird Komponente B vorgelegt und Komponente A als Feststoff und/oder als Suspension zugegeben, worauf die Zugabe von Komponente C erfolgt.

Gemäß den obigen bevorzugten Ausführungsformen können Verbindungen der Formel I hergestellt werden, worin n und m 1 und 3, 2 und 2, sowie 3 und 1 betragen können, wobei jeweils 2 für m und n bevorzugt ist.

Es ist vorteilhaft, wem bei den Ausführungsformen des erfindungsgemäßen Verfahrens in Abhängigkeit der Werte von n und m auf das Molverhältnis zwischen Komponente C (bzw. Verbindung III) und Komponente B (bzw. Verbindung IV) geachtet wird.

Für den Fall, daß das erfindungsgemäße Silan der Formel I über ein Anhydrid der Formel V anstelle der Verbindung der Formel III hergestellt wird, liegt eine erfindungsgemäß bevorzugte Ausführungsform vor, wenn die die Verbindung der Formel II, bevorzugt Tetrachlorsilan, in einem Lösungsmittel gelöst, bevorzugt jedoch in Substanz (Komponente B) vorgelegt wird, und mit dem Anhydrid der Formel V in einem inerten Lösungsmittel gelöst, vorzugsweise jedoch in Substanz (Komponente A') und dem entsprechenden Alkohol der Formel IV, in einem Lösungsmittel gelöst, bevorzugt jedoch in Substanz (Komponente C) versetzt wird.

In einer weiteren Ausführungsform der vorliegenden Erfindung wird die Komponente A' vorgelegt und die Komponenten B und C gleichzeitig zugegeben.

In einer anderen erfindungsgemäßen Ausführungsform wird die Komponente A' vorgelegt und mit der Zugabe der Komponente B vor der Zugabe der Komponente C begonnen.

In einer anderen Ausführungsform der vorliegenden Erfindung wird die Komponente A' und die Komponente C portionsweise alternierend zu Komponente B gegeben, wobei vorzugsweise mit der Komponente A' die alternierende Zugabe begonnen wird.

Gemäß den obigen bevorzugten Ausführungsformen können Verbindungen der Formel I hergestellt werden, worin n und m 1 und 3, 2 und 2, sowie 3 und 1 betragen können, wobei jeweils 2 für m und n bevorzugt ist.

Für den Fall, daß n gleich 1 und m gleich 3 ist, ist zu beachten, daß das Molverhältnis von Komponente C zu Komponente B während der Reaktion stets ≤ 1 ist, wobei bevorzugt ist, daß das Molverhältnis am Ende der Reaktion 1 beträgt. Wenn m und n gleich 2 sind, ist zu beachten, daß das Molverhältnis von Komponente C zu Komponente B während der Reaktion stets ≤ 2 ist, wobei das Verhältnis bevorzugt zum Ende der Reaktion 2 beträgt. Hat n den Wert 3 und m den Wert 1, ist es vorteilhaft, wenn das Molverhältnis von Komponente C zu Komponente B während der Reaktion stets ≤ 3 ist, wobei vorzugsweise zum Ende der Reaktion das Molverhältnis 3 beträgt. Ferner kann es erfindungsgemäß bevorzugt sein, daß das Molverhälnis der Komponente A bzw. A' zu Komponente B ≥ 4:1 beträgt.

Weiterhin kann das erfindungsgemäße Verfahren, vorzugsweise die Zugabe der Komponenten A bzw. A', B und C unabhängig voneinander bei Temperaturen von 10 bis 100, bevorzugt 20 bis 70 und besonders bevorzugt 40 bis 60°C erfolgen.

Die Zugabezeit der Komponenten A bzw. A' B und C kann unabhängig voneinander zwischen 1 Minute und 24 Stunden, bevorzugt 1 bis 3, und besonders bevorzugt 1,5 bis 2 Stunden betragen.

Es ist vorteilhaft, wenn bei den Ausführungsformen des erfindungsgemäßen Verfahrens in Abhängigkeit der Werte von n und m auf das Molverhältnis zwischen Komponente C (bzw. Verbindung III) und Komponente B (bzw. Verbindung IV) geachtet wird.
Auch bei der Verwendung des Anhydrids ist es vorteilhaft, wenn bei den Ausführungsformen des erfindungsgemäßen Verfahrens in Abhängigkeit der Werte von n und m auf das Molverhältnis zwischen Komponente C (bzw. Verbindung II) und Komponente B (bzw. Verbindung IV) in der zuvor ausgeführten Weise geachtet wird.

Darüber hinaus kann es erfindungsgemäß vorteilhaft sein, vorzugsweise dann, wenn die Verbindung der Formel II vorgelegt wird und das Anhydrid der Formel V zugesetzt wird, ggf. anfallendes Säurechlorid vorzugsweise destillativ zu entfernen und mit der Zugabe des Alkohols der Formel IV erst nach Beginn der Entfernung des Säurechlorids, vorzugsweise jedoch nach Beendigung der Entfernung des Säurechlorids, zu beginnen.

Die Aufarbeitung des durch das erfindungsgemäße Verfahren hergestellten Produkts mit der Formel I erfolgt bevorzugt durch Abtrennen des Salzes mit der Formel MX, bevorzugt Natriumchlorid, durch Filtration, Abdekantieren oder ähnliche, dem Fachmann bekannte Methoden. Das ggf. vorhandene Lösungsmittel, insbesondere Hexan oder Petrolether, und das Reaktionsprodukt mit der Formel HR₂, bevorzugt Essigsäure, wird beispielsweise durch Destillation, Vakuumdestillation oder Chromatografie oder einem anderen, dem Fachmann geläufigen Verfahren abgetrennt und das Produkt gereinigt, wobei die Vakuumdestillation bei einer Sumpftemperatur von maximal 100°C bevorzugt ist. Destillation kann gleichfalls über einen Dünnschichtverdampfer oder durch Einsatz einer Destillationskolonne erfolgen. Wenn in dem erfindungsgemäßen Verfahren ein Anhydrid eingesetzt wird, ist es bevorzugt, das anfallende Säurehalogenid des Anhydrids, vorzugsweise destillativ, zu entfernen, wobei es erfindungsgemäß besonders bevorzugt ist das Säurehalogenid gleich nach seinem Entstehen zu entfernen. Die weitere Aufarbeitung erfolg gemäß der obigen Ausführung.

Die Erfindung wird nun anhand der folgenden Beispiele verdeutlicht.

### BEISPIELE

### Beispiel 1

### Synthese von Diacetoxydi-tert.-butoxysilan

In einem Vierhalskolben mit Rückflußkühler, Rührer, Topftrichter und Thermometer wurden 200 ml Hexan vorgelegt und darin 82 g (1 mol) Natriumacetat aufgeschlämmt. Die Aufschlämmung wurde auf 50°C erwärmt, schnell gerührt und über den Topftrichter innerhalb von 15 Minuten 42,5 g (0,25 mol) Tetrachlorsilan zugetropft, wobei die Temperatur durch die Reaktionswärme auf 65°C anstieg. Das Reaktionsgemisch wurde nun noch 1 Stunde bei 65 bis 67°C gerührt und danach 16 Stunden ohne weitere Erwärmung gerührt, wobei sich das Reaktionsgemisch auf Zimmertemperatur abkühlte. Danach wurde wieder auf 65°C erwärmt, innerhalb von 5 Minuten 37 g (0,5 mol) tert.-Butanol zugetropft und anschließend das Reaktionsgemisch noch 3 Stunden bei 50°C gerührt.

Das 50°C warme Reaktionsgemisch wurde nun über eine Druckfilternutsche filtriert und der Filterkuchen mit 200 ml n-Hexan gewaschen. Das Filtrat wurde nun am Vakuumrotationsverdampfer bei 50°C eingeengt.

Es wurden 62 g (85%) Diacetoxydi-tert.-butoxysilan mit einer Reinheit (gemäß Gaschromatogram) von 95 bis 96% erhalten. Die Destillation über eine Kolonne bei 56°C und 0,1 mbar ergab 57,2 g (78,5%) Diacetoxydi-tert.-butoxysilan mit einer Reinheit von 97 bis 98% gemäß Gaschromatografie. Das ¹H-NMR-Spektrum entsprach der Struktur des Diacetoxydi-tert.-butoxysilans.

### Beispiel 2

### Synthese von Diacetoxydi-tert.-butoxysilan

In einem Vierhalskolben mit Rückflußkühler, Rührer, Topftrichter und Thermometer wurden 800 mi Hexan vorgelegt und darin 345 g (4,2 mol) Natriumacetat dispergiert. Dazu wurden ohne vorheriges Heizen innerhalb von 30 Minuten 170 g (1 mol) Tetrachlorsilan zugetropft, wobei sich das Reaktionsgemisch auf ca. 70°C erwärmte und das Lösungsmittel am Rückfluß siedete. Das Reaktionsgemisch wurde anschließend noch 1 Stunde bei 70°C gerührt, auf 50°C abgekühlt, innerhalb von 5 Minuten unter Rühren mit 148 g (2 mol) tert.-Butanol versetzt, noch 1,5 Stunden bei 50 bis 60°C gerührt und anschließend über eine Druckfilternutsche filtriert. Der Filterkuchen wurde dreimal mit je 200 mi 50°C warmen n-Hexan gewaschen und die vereinigten Filtrate am Vakuumrotationsverdampfer bei 60°C und einem mbar eingeengt.

Die Ausbeute an Diacetoxydi-tert.-butoxylsilan betrug 276,2 g (94,6%) mit einer gaschromatografisch bestimmten Reinheit von mehr als 98%.

### Beispiel 3

### Synthese von Tetraacetoxyalkoxysilanen mit Acetanhydrid

221 g (1,3 mol) SiCl₄ werden in einem Kolben, der mit Innenthermometer, Tropftrichter, Rührer und Destillationsbrücke ausgerüstet ist, vorgelegt und unter Rühren mit 530 g (5,2 mol) Acetanhydrid und 4 g Essigsäure versetzt. Das Gemisch wird nun 1 h bei 45 - 50 °C gerührt und anschließend 404 g Acetylchlorid über eine Destillationsbrücke abdestilliert (Übergang: 50 - 58 °C). Zu dem Rückstand werden danach je 2,6 mol des entsprechenden Alkohols zugegeben. Das Gemisch wird nun 1 h bei 50 °C gerührt und durch Vakuumdestillation aufgearbeitet. Die Ergebnisse sind in der Tabelle 1 zusamengefaßt.

Die ¹H- und ²⁹Si-NMR-Spektren entsprachen der vermuteten Struktur.

**Tabelle 1**

| **Diacetoxydialkoxysilane** | | | | |
|---|---|---|---|---|
| **Nr.** | **eingesetzter Alkohol** | **Verbindung** | **Ausbeuten [%]** | **Siedebereich [°C/mbar]** |
| 1 | Ethanol | (CH₃COO)₂Si(OCH₂CH₃)₂ | 54 | 74-87/1,5 32-37/0,4-0,7 |
| 2 | iso-Propanol | (CH₃COO)₂Si[OCH(CH₃)₂]₂ | 56 | 41-45/0,5-2 |
| 3 | n-Butanol | (CH₃COO)₂Si[O(CH₂)₃CH₃]₂ | 56 | ca. 68/1 |
| 4 | t-Butanol | (CH₃COO)₂Si[OC(CH₃)₃]₂ | 82 | 68-70/0,5 |

## Patentansprüche

1. Verfahren zur Herstellung eines Silans der Formel I
R¹ₙSiR²ₘ (I)
worin
R¹ ein ―O―Y-Rest,
n eine ganze Zahl von 1 bis 3,
R² ein 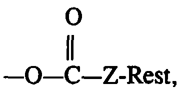
m eine ganze Zahl bis 1 bis 3 und n + m = 4 ist, und
Y und Z unabhängig voneinander gegebenenfalls mit einem oder mehreren Halogen substituierte C₁- bis C₂₀-Alkyl, C₂- bis C₂₀-Alkenyl, C₂- bis C₂₀-Alkinyl und -(CH₂)ₚ-A sind, worin p eine ganze Zahl von 0 bis 6 und das ggf. mit einem oder mehreren C₁- bis C₆-Alkylen substituierte A einen 3- bis 20-gliedrigen Kohlenwasserstoffring bedeuten,
dadurch gekennzeichnet, daß eine Halogenverbindung des Siliciums mit der Formel II
SiX₄ (II)
worin
X Fluor, Chlor, Brom und Iod ist,
mit Verbindungen der Formel III und IV, oder mit einem Anhydrid der Formel V und der Verbindung der Formel IV
MR² (III)
H-R¹ (IV) 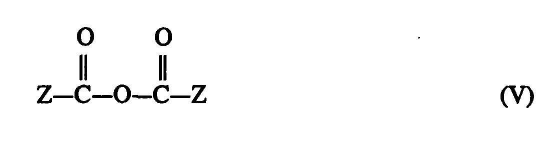
worin
R¹ und R² sowie Z die obige Bedeutung besitzen,
M ein Metall der ersten und zweiten Hauptgruppe ist,
umgesetzt wird.

2. Verfahren nach Anspruch 1, wobei Y und Z unabhängig voneinander ein C₁- bis C₂₀-Alkyl-, C₃- bis C₂₀-Cycloalkyl- und ein C₆- bis C₁₄-Arylrest sind.

3. Verfahren nach Anspruch 1 oder 2, wobei Y tert.-Butyl und Z Methyl ist.

4. Verfahren nach einem der Ansprüche 1 bis 3, dadurch gekennzeichnet, daß die Umsetzung als Eintopfverfahren erfolgt.

5. Verfahren nach einem der Ansprüche 1 bis 4, dadurch gekennzeichnet, daß die Umsetzung in einem aprotischen Lösungsmittel erfolgt.

6. Verfahren nach einem der Ansprüche 1 bis 5, dadurch gekennzeichnet, daß die Umsetzung in einem Temperaturbereich von 10 bis 100°C erfolgt.

7. Verfahren nach einem der Ansprüche 1 bis 6, dadurch gekennzeichnet, daß M ein Metall der 1. Hauptgruppe, vorzugsweise Na, ist.

8. Verfahren nach einem der Ansprüche 1 bis 7, dadurch gekennzeichnet, daß die Verbindung der Formel IV erst nach Beginn des Einsatzes der Verbindung der Formel III oder V eingesetzt wird.

9. Verfahren nach einem der Ansprüche 1 bis 8, dadurch gekennzeichnet, daß Siliciumtetrachlorid mit Natriumacetat und darauffolgend mit tert.-Butanol zu Diacetoxydi-tert.-butoxysilan in Hexan bei 40 bis 60°C umgesetzt wird.

10. Verfahren nach einem der Ansprüche 1 bis 8, dadurch gekennzeichnet, daß Siliciumtetrachlorid mit Acetanhydrid und darauffolgend mit tert.-Butanol zu Diacetoxydi-tert.-butoxysilan bei 40 bis 60 °C umgesetzt wird.
